Europäisches Patentamt

European Patent Office

Office européen des brevets

Publication number: **0 284 303**

**A2**

# EUROPEAN PATENT APPLICATION

Application number: **88302383.0**

Date of filing: **18.03.88**

Int. Cl.⁴: **B60Q 1/30**

Priority: **23.03.87 GB 8706810**

Date of publication of application:
**28.09.88 Bulletin 88/39**

Designated Contracting States:
**BE DE ES FR GB NL SE**

Applicant: **TRAILEX (UK) LIMITED**
**Ambassador House 124 Rickmansworth**
**Road**
**Watford Hertfordshire WD1 7JG(GB)**

Inventor: **Colburn, Alan Charles**
**21 The Ridgeway**
**Watford Hertfordshire WD1 3TM(GB)**
Inventor: **Dealey, Alan**
**6 Kimpton Place**
**Garston Hertfordshire(GB)**

Representative: **Enskat, Michael Antony Frank**
**et al**
**Saunders & Dolleymore 9, Rickmansworth**
**Road**
**Watford Hertfordshire WD1 7HE(GB)**

Monitoring systems.

A monitoring system monitors an auxiliary lighting array comprising a plurality of lights (4 to 14). The system comprises a plurality of sensing circuits (54 to 74) for sensing the energisation current supplied to each light (4 to 14) or each group of lights, buffer amplifiers (76) means for sensing when the current sensed by a said sensing circuit (54 to 74) exceeds a predetermined threshold level, and a light emitting diode (34 to 40) for each light (4 to 14) or each group of lights (4 to 14) to provide a visual indication when the current drawn by the corresponding light or a corresponding group of lights exceeds said predetermined threshold level.

EP 0 284 303 A2

FIG.1

## MONITORING SYSTEMS

The present invention relates to monitoring systems.

Vehicle trailers are required by law to carry an auxiliary lighting array for example a lighting board which effectively mirrors the conventional lighting arrangement at the rear of the vehicle towing the trailer. The same provision applies to caravans and articulated lorries.

The lighting board on the trailer is electrically coupled by means of a plug and socket to the vehicle lighting system of the towing vehicle. Conventionally a single indicator lamp or audible buzzer is provided within the towing vehicle, which lamp or buzzer operates only when either of the left or right hand indicators is switched ON. With this arrangement, however, it is not possible to monitor all the light bulbs carried by the lighting board. Should one or more of the bulbs fail this could be hazardous for other road users and the driver of the towing vehicle would not be aware of the hazard.

It is an object of the invention to provide an improved monitoring system for monitoring an auxiliary lighting array.

According to the present invention there is provided a monitoring system for monitoring an auxiliary lighting array comprising a plurality of energisable illumination means, the system comprising a plurality of sensing means for sensing the energisation current supplied to each illumination means or each group of illumination means, threshold means for sensing when the current sensed by a said sensing means exceeds a predetermined threshold level, and visual indication means for each illumination means or each group of illumination means to provide a visual indication when the current drawn by the corresponding illumination means or a corresponding group of illumination means exceeds said predetermined threshold level.

Advantageously the system includes audible indication means for providing an audible alarm when selected visual indication means provide a visual indication.

Preferably each said sensing means comprises a resistor connected in series with the current supply path to a corresponding said illumination means or a corresponding group of illumination means, a first potential divider connected to one terminal of the resistor, second and third potential dividers connected in cascade to the other terminal of the resistor, and a differential amplifier connected to amplify the potential difference between the output of the first potential divider and the output of the cascade-connected second and third potential dividers.

The supply rail of the differential amplifier is connected to one terminal of said resistor through a rectifier.

Each threshold device comprises a buffer amplifier having a predetermined input signal threshold level and a Darlington drive circuit connected to the output of the buffer amplifier for supplying a drive current for the visual indication means.

Each visual indication means may comprise a light emitting diode.

A trailer lighting board monitoring system embodying the invention will now be described, by way of example, with reference to the accompanying diagrammatic drawings, in which:

Figure 1 is a perspective view of a trailer board coupled to a towing vehicle incorporating the monitoring system; and

Figure 2 is a circuit diagram of the monitoring system.

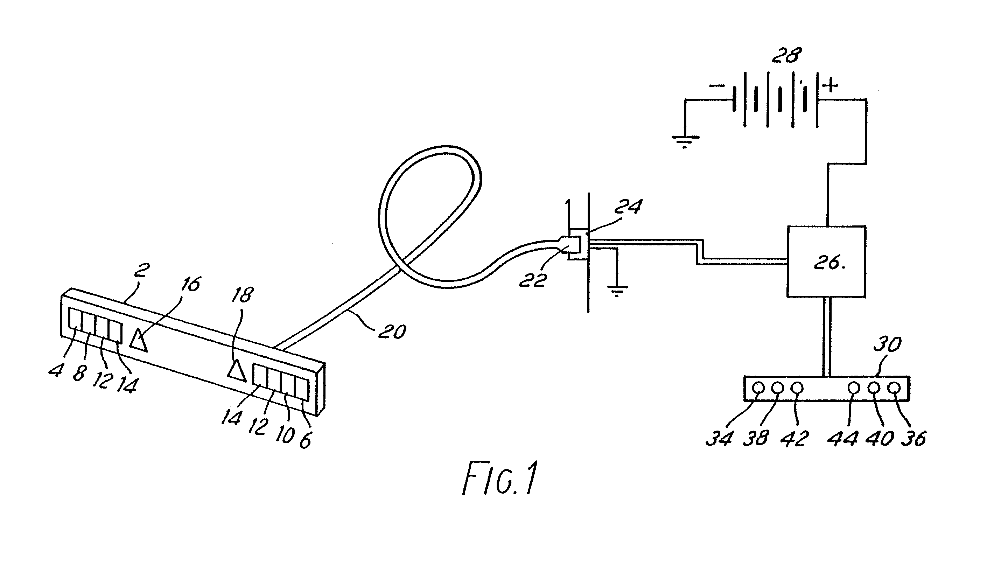

As shown in Figure 1 a trailer board 2 has left and right hand indicator lights 4 and 6, left and right hand tail lights 8 and 10, a pair of brake lights 14 (connected in parallel) and a pair of fog lights 12 (connected in parallel). The board carries a pair of triangular red reflectors 16 and 18. A seven core cable 20 extending from the board 2 has a plug 22 which is coupled to a socket 24 mounted on the towing vehicle (not shown). The socket 24 is connected to the monitoring system 26. The monitoring system 26 is connected to a power supply 28 through the appropriate dashboard switches (not shown) and to a lighting panel carrying six light sources 34 to 44. The sources 34 and 36 provide a respective indication when the left and right hand indicators are energised, the sources 38 and 40 provide a respective indication when the left and right hand tail lights are energised, the source 42 provides an indication when the brake lights are energised and the source 44 provides an indication when one of the fog lamps 14 is energised.

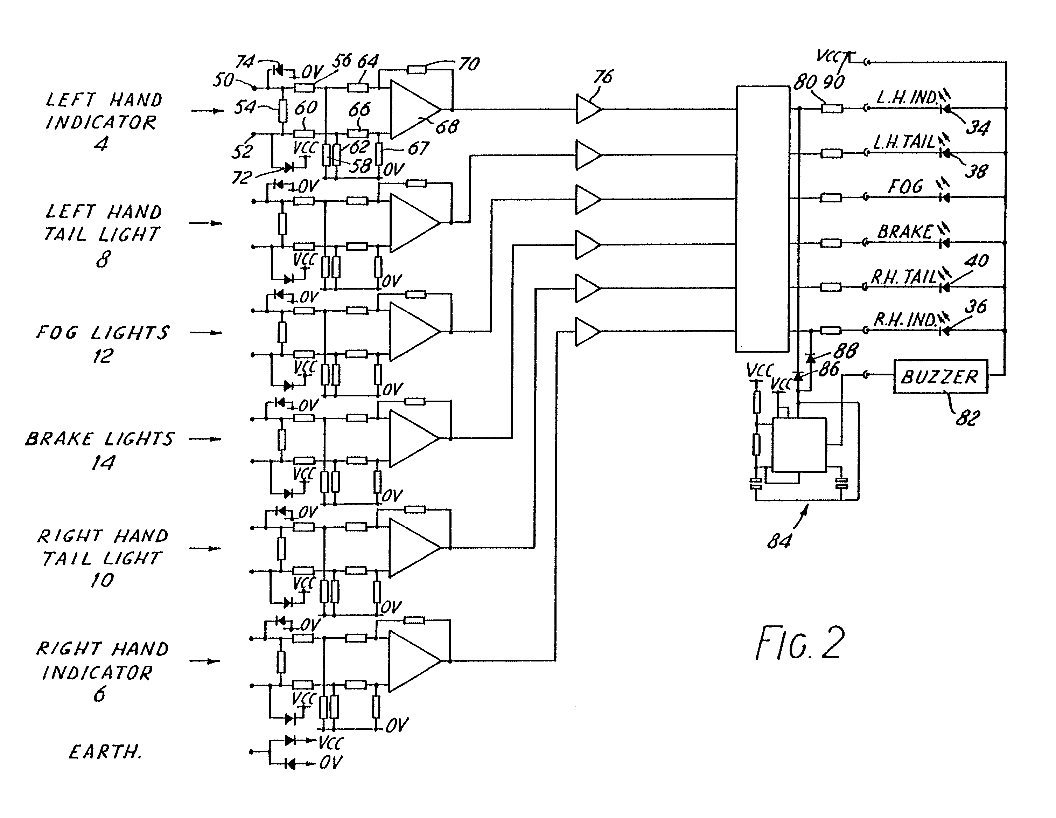

The monitoring circuit is shown in more detail in Figure 2. As shown, an input terminal 52 is connected to the positive terminal of the battery 28 through a left hand indicator switch (not shown). An output terminal 50 is connected to one terminal of the bulb of the left hand indicator lamp; the other terminal of the bulb is connected to earth.

A low value resistor 54 is coupled across the terminals 50 and 52 so as to be connected in series with the bulb. The resistor 54 has a value chosen to have little effect on the level of current drawn by the bulb. When the bulb is energised, however, a small voltage drop will appear across the resistor 54 and therefore across the terminals 50 and 52. The occurrence of this voltage indicates that the bulb is energised.

The voltage at the terminal 50 is stepped down by a potential divider consisting of resistors 56 and 58 connected in series. The voltage at terminal 54 is stepped down by another potential divider consisting of resistors 60 and 62 connected in series. The output from the potential divider (56,68) is coupled through a resistor 64 to one input of a differential amplifier 68. The output from the other potential divider (60,62) is coupled to the other input of the differential amplifier through yet another potential divider consisting of resistors 66 and 67 connected in series. A negative feedback resistor 70 is connected between the output of the differential amplifier 68 and one input thereof. The gain of the amplifier is of the order of 200. The supply voltage for the differential amplifier is derived from the input terminal 52 through a diode 58 to the power rail Vcc of the amplifier. The negative rail of the amplifier is earthed. In the case of a towing vehicle using a negative earth system the power rail of the amplifier 68 is connected to the terminal 50 through a diode 74.

The output of the differential amplifier is coupled to the input of a buffer amplifier 76. The amplifier 76 is advantageously a CMOS non-inverting buffer, having a threshold level of around 7 volts. Accordingly as soon as the output of the differential amplifier 68 exceeds the threshold level, the buffer amplifier will provide an output signal. The output of the buffer amplifier 76 is connected to the input of a Darlington circuit having an output connected to a positive supply terminal 90 through the series combination of a resistor 80 and the diode 34. The output of the Darlington circuit is also connected to the positive supply terminal 90 through the series circuit consisting of a diode 86, an oscillator 84 in the form of an astable multivibrator and a buzzer 82.

In operation when the left-hand indicator switch (not shown) is switched ON, current flowing through the left-hand indicator bulb causes a voltage difference to appear across the resistor 54.

The levels of the voltages appearing across the terminals 50 and 52 is dropped by a series of potential dividers and the resulting voltage difference is applied across the input terminals of the differential amplifier. When the amplified difference signal exceeds the threshold level of the buffer amplifier 76, the buffer amplifier will feed a signal to the Darlington circuit which in turn will act to provide a driving current. This driving current is used on the one hand to energise the light emitting diode 34 and on the other hand to cause the oscillator 84 to oscillate and thereby cause the buzzer 82 to emit an audible warning.

Because the left-hand indicator bulb will flash ON and OFF, the light emitting diode 34 will flash in synchronism therewith.

While only the monitoring circuit for the left-hand indicator light 4 has been described, it will be appreciated that the monitoring circuits for the other indicator lights are generally similar and operate in a similar manner.

The oscillator 84 and buzzer 82 are only coupled to the Darlington circuits associated with the left-hand and right-hand indicators.

It will be appreciated that while the monitoring circuit described has been directed to the monitoring of a tail board for a trailer it can be used to monitor any other lighting display.

In a modification a potentiometer can be included in series with a selected or each light-emitting diode to control the brilliance of this output.

It will be appreciated that with the arrangement described the light-emitting diodes provide a fail-safe system of indications, that is the light-emitting diode will only light up when its corresponding indicator light is energised. If the light-emitting diode fails to light up this is a warning to the driver that there is a fault, either the corresponding bulb has failed or the diode or its driving circuit has developed a fault.

Because the system uses low value resistors to sense the supply of current to the lighting array and because the voltage across the resistors is independently amplified and processed, the system lends itself to being coupled to a multitude of different lighting arrays with different energising conditions. The monitoring system does not have to be individually tailored to each lighting array.

**Claims**

1. A monitoring system for monitoring an auxiliary lighting array having a plurality of energisable illumination means, the system comprising a plurality of sensing means for sensing the energisation current supplied to each illumination means or each group of illumination means, threshold means for sensing when the current sensed by a said sensing means exceeds a predetermined threshold level, and visual indication means for each illumination means or each group of illumination means to provide a visual indication when the current drawn by the corresponding illumination means or a corresponding group of illumination means exceeds said predetermined threshold level.

2. A system according to Claim 1 including audible indication means for providing an audible alarm when selected visual indication means provide a visual indication.

3. A system according to Claim 1 or to Claim 2 wherein each said sensing means comprises a resistor connected in series with the current supply path to a corresponding said illumination means or a corresponding group of illumination means, a first potential divider connected to one terminal of the resistor, second and third potential dividers connected in cascade to the other terminal of the resistor, and a differential amplifier connected to amplify the potential difference between the output of the first potential divider and the output of the cascade-connected second and third potential dividers.

4. A system according to Claim 3 wherein the supply rail of the differential amplifier is connected to one terminal of said resistor through a rectifier.

5. A system according to any one of the preceding claims wherein each threshold device comprises a buffer amplifier having a predetermined input signal threshold level and a Darlington drive circuit connected to the output of the buffer amplifier for supplying a drive current for the visual indication means.

6. A system according to any one of the preceding claims wherein each visual indication means comprises a light emitting diode.

7. A trailer lighting board monitoring system for monitoring the energisation state of a plurality of lights mounted on the trailer board, the system comprising for each light, a resistor connected in circuit series with the energisation path for the light, a pair of potential dividers for each resistor, the pair of potential dividers being connected between a common point and a respective one of the two opposite ends of the resistor, for each pair of potential dividers, a differential amplifier connected to the intermediate taps of the potential dividers and for each differential amplifier a buffer amplifier and illumination means, connected in cascade, whereby when the output of the differential amplifier exceeds the threshold level of the buffer amplifier, the illumination means is illuminated.

8. A system according to Claim 7 wherein each differential amplifier has a negative feedback path incorporating a resistor.

9. A system according to Claim 7 or to Claim 8 including a Darlington circuit connected between each buffer amplifier and the corresponding illumination means.

10. A system according to Claim 9 including a buzzer circuit connected to the output of the Darlington circuit whereby the buzzer circuit is energised to emit an audible alarm when a said illumination means is energised.

FIG.1

0 284 303

FIG. 2